# EUROPÄISCHE PATENTSCHRIFT

(11) **EP 0 506 796 B1**
(45) Veröffentlichungstag und Bekanntmachung des Hinweises auf die Patenterteilung: **30.11.1994**
(21) Anmeldenummer: 91901731.9
(22) Anmeldetag: 13.12.1990
(51) Int. Cl.: A01M 1/02

(54) **FLIEGENKÖDER**
FLY LURE
APPAT POUR MOUCHES

(30) Priorität: 22.12.1989 DE 8915080 U
(43) Veröffentlichungstag der Anmeldung: 07.10.1992
(73) Patentinhaber: S.C. JOHNSON & SON, INC., Racine, WI 53403-5011 (US)
(72) Erfinder: SCHRÖDER, Peter, D-4060 Viersen (DE); HÜLSBUSCH, Birgit, D-4000 Düsseldorf (DE); HÜLSMANN, Andreas, D-4000 Düsseldorf 13 (DE); SCHMIDT-TIEDEMANN, Steffen, D-4000 Düsseldorf 12 (DE)
(74) Vertreter: Ruschke, Hans Edvard, Dipl.-Ing.
(86) Internationale Anmeldenummer: EP9002168
(87) Internationale Veröffentlichungsnummer: WO9109519

(56) Entgegenhaltungen:
- DE-A- 2 915 074
- FR-A- 1 463 757
- US-A- 404 494
- US-A- 897 919
- US-A- 1 286 763

## Beschreibung

Die Erfindung richtet sich auf einen Fliegenköder, bestehend aus einem Grundkörper mit darauf aufgebrachter Ködermasse nach dem Oberbegriffs des Anspruchs 1.

Zur Bekämpfung von Fliegen in Räumen sind unter Ausnutzung unterschiedlicher Wirkmechanismen verschiedene Methoden bekannt. Mittels Spraydosen oder Sprühpumpen kann eine kurzzeitige, für die Fliegen tödliche Raumluftkonzentration an insektizidem Wirkstoff erzeugt werden. Es kann beispielsweise mittels elektrischer Verdampfungsgeräte und insektizide Wirkstoffe abgebender, damit zusammenwirkender Wirkstoffplättchen oder Strips eine kontinuierliche, für Fliegen tödliche Raumluftkonzentration an insektizidem Wirkstoff erzeugt werden. Es ist auch möglich, mittels Spraydosen, Sprühpumpen oder Stiften insektizide Beläge an von Fliegen bevorzugten Aufenthaltsorten aufzubringen. Mittels elektrischer Lampen ist es möglich, Fliegen anzulocken und zur Bekämpfung auf ein stromführendes Gitter zu leiten. Des weiteren sind Produkte mit klebriger Oberfläche, wie beispielsweise Leimstreifen, bekannt, die an von Fliegen bevorzugten Aufenthaltsorten plaziert werden. Ferner gibt es die bekannten mechanischen Bekämpfungsmittel, wie Fliegenklatschen oder Fliegengitter. Schließlich sind sogenannte Fliegenköder bekannt, die installiert bzw. aufgestellt werden und welche die Fliegen anlocken und bekämpfen.

Fliegenköder nutzen demgegenüber das natürliche Verhalten, d. h. die Bedürfnisse und die Vorlieben der Fliegen, um sie anzulocken und enthalten in der Regel Fliegenködermassen, die ein mit einem Giftstoff versehenes Nahrungsangebot für die Fliegen darstellen. Fliegenköder sollen demzufolge die Fliegen anlocken und dazu veranlassen, das tödliche Gift durch Fressen der Fliegenködermasse in sich aufzunehmen.

Der Vorteil von Fliegenködern gegenüber anderen Fliegenbekämpfungsmethoden besteht darin, daß das angestrebte Ziel mit einem Minimum an Aktivsubstanz erreicht wird. Gleichzeitig wird kein Wirkstoff in die Raumluft oder die Umgebung des Köders abgegeben, so daß ohne direkten Kontakt mit der Ködermasse von diesem keine für den Menschen gesundheitsgefährdende Wirkung ausgeht.

Aus der DE-A-2 915 074 ist ein Fliegenköder bekannt, der aus einem kammerförmigen Behälter besteht. In der Oberseite des Behälters ist mindestens eine längliche Öffnung ausgebildet, die den zu vernichtenden Insekten den Zutritt ins Kammerinnere gestattet. Im Inneren der Kammer ist eine Ködermasse angeordnet.

Aus dem DE-U-86 16 750 ist ferner ein Fliegenköder bekannt, der aus einem Grundkörper besteht, auf welchem Ködermasse aufgebracht ist. Dieser bekannte Fliegenköder besitzt einen steifen Grundkörper mit dreieckigem Querschnitt, auf welchem Fliegenködermasse in schräg verlaufenden Streifen aufgebracht ist. Die realisierte Ausführungsform weist einen blauen Grundkörper mit beigebraunem Streifen aus Ködermasse auf.

Dieser Fliegenköder weist aber den Nachteil auf, daß er in seiner Wirkungsweise nicht an die Effektivität der meisten vorstehend beschriebenen traditionellen Methoden zur Fliegenbekämpfung heranreicht. Qualitätskriterium der Fliegenbekämpfung mit Ködern ist die Anzahl der pro Zeiteinheit angelockten und abgetöteten Fliegen, wobei dem Anlocken der Fliegen die wesentliche Bedeutung zukommt.

Aufgabe der Erfindung ist es, einen in der Wirkungsweise, insbesondere bezüglich der Anlockung von und der Attraktivität für Fliegen, deutlich verbesserten Fliegenköder zu schaffen.

Bei einem Fliegenköder der eingangs bezeichneten Art wird diese Aufgabe gemäß der Erfindung dadurch gelöst, daß der Grundkörper als Vieleck-Halbzylinder, vorzugsweise als Halbzylinder mit sieben Vieleckflächen und einer Bodenfläche, mit metallisch glänzender und reflektierender Oberfläche ausgebildet ist und auf jeder Vieleckfläche Ködermasse, vorzugsweise als Streifen in Längsachsrichtung, aufgebracht ist. Besonders gute Ergebnisse werden erzielt, wenn die reflektierende Oberfläche rötlich, golden oder silbrig, vorzugsweise rot, gefärbt und die Ködermasse dazu unterschiedlich, vorzugsweise dunkelblau, gefärbt ist.

Aufgrund der erfindungsgemäß ausgebildeten glänzenden, reflektierenden und annähernd halbzylindrischen Oberfläche mit darauf aufgebrachter und den Fliegen dargebotener Ködermasse wird ein Fliegenköder geschaffen, der in seiner Leistungsfähigkeit, d. h. in der Anzahl der angelockten und abgetöteten Fliegen, gegenüber bekannten Fliegenködern deutlich verbessert ist.

Die deutlich verbesserte Wirkungsweise des Fliegenköders gemäß der Erfindung wurde in Versuchen nachgewiesen, bei denen jeweils 100 Fliegen für 24 Stunden in einem ca. 24 m² und 90 m³ großen Raum frei beweglich verblieben. Diese Räume besaßen ein Fenster, vor welchem in einem Abstand von ca. 1 m zueinander der erfindungsgemäße Köder sowie ein Köder entsprechend GM 86 16 750 dargeboten wurden. Als weitere Nahrungsquelle wurde auf dem Boden des Raumes in ca. 2 m Entfernung zum Fenster Raffinade-Zucker angeboten. Nach 24 Stunden erfolgte die Vergleichsbonitur. Die direkte Abfangleistung eines Köders ermittelte sich aus der Anzahl der um den jeweiligen Köder herumliegenden Fliegen in irreversibler Rückenlage, d. h. der toten Fliegen. Die im Raum liegenden toten Fliegen wurde bei der Entscheidung nicht berücksichtigt. Bei den einzelnen Versuchen wurden folgende Ergebnisse, jeweils ausgedrückt in Zahl der aufgefundenen toten Fliegen ermittelt:

| Fliegenköder entsprechend der Erfindung | Fliegenköder entsprechend Stand der Technik |
|---|---|
| 25 | 10 |
| 27 | 18 |
| 30 | 15 |
| 31 | 15 |
| 23 | 8 |
| 22 | 17 |

Diesen Versuchen kann die deutlich verbesserte Wirkungsweise des erfindungsgemäßen Köders entnommen werden.

In Ausgestaltung sieht die Erfindung vor, daß die Ködermasse auf die von aneinander angrenzenden Vieleckflächen gebildeten Kanten aufgetragen ist. Hierbei verbleiben die glänzenden Oberflächen im Bereich der einzelnen Vieleckflächen frei von Ködermasse. Dies kommt der Eigenart der Fliegen entgegen, daß Fliegen gerne auf schrägen Flächen sitzen und sich an den schrägen oder senkrechten Flächen bevorzugt bewegen.

Schließlich ist die Erfindung in weiterer Ausgestaltung zur Erreichung einer sicheren Standfläche für den Fliegenköder dadurch gekennzeichnet, daß die Bodenfläche als ebene Standfläche ausgebildet ist.

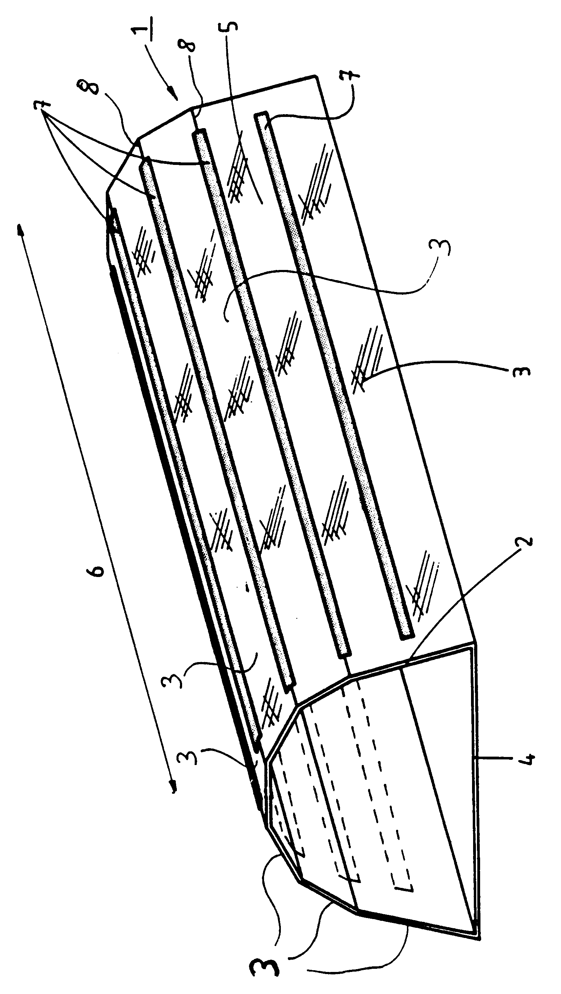

Die Erfindung ist nachstehend anhand der Zeichnung beispielsweise erläutert. Diese zeigt in der einzigen Figur eine perspektivische Ansicht eines Fliegenköders.

Der insgesamt mit 1 bezeichnete Fliegenköder besteht aus einem Grundkörper 2 in Form eines Vieleck-Halbzylinders. Der Vieleck-Halbzylinder besitzt sieben Vieleckflächen 3 und eine Bodenfläche 4. Die Bodenfläche 4 ist als ebene Standfläche für den Fliegenköder 1 ausgebildet. Die Vieleckflächen 3 weisen eine metallisch glänzende und reflektierende Oberfläche 5 auf. Die Farben dieser Oberfläche sind rötlich oder rot, golden oder silbrig. Auf den Vieleckflächen 3 ist in Längsachsrichtung 6 des Grundkörpers 2 eine Ködermasse 7 in Streifenform aufgebracht. In der Mehrzahl sind die Streifen der Ködermasse 7 auf die von aneinander angrenzenden Vieleckflächen 3 gebildeten Kanten 8 aufgetragen. Die Farbe der Ködermasse 7 ist unterschiedlich zur Farbe der Oberfläche 5 und insbesondere blau, vorzugsweise dunkelblau. Die Ködermasse kann aber auch grün, gelb, rot, schwarz oder weiß sein. Die Ködermassestreifen 7 bedecken jeweils eine Fläche von 0,5 cm x 18 cm, so daß auf dem Fliegenköder insgesamt eine Fläche von 72 cm² mit Ködermasse bedeckt ist. Der Grundkörper 2 weist eine Höhe von 5 cm und eine Bodenfläche von 140 cm² mit 20 cm in Längsrichtung bei einer Breite von 7 cm auf.

Aufgrund der in Stufen gekrümmten, glänzenden, reflektierenden und speziell gefärbten Oberfläche 5 entfaltet der Fliegenköder 1 eine besondere Anziehungskraft auf Fliegen, wie durch die obenstehenden Versuche belegt wird.

## Patentansprüche

1. Fliegenköder (1) bestehend aus einem eine Bodenfläche (4) aufweisenden Grundkörper (2) mit glänzender Oberfläche (5) und aufgebrachter Ködermasse (7),
dadurch gekennzeichnet,
daß der Grundkörper (2) als Vieleck-Halbzylinder, vorzugsweise als Halbzylinder, mit sieben Vieleckflächen (3) ausgebildet ist und auf jeder Vieleckfläche (3) Ködermasse (7), vorzugsweise als Streifen (7), in Längsachsrichtung (6), aufgebracht ist.

2. Fliegenköder nach Anspruch 1,
dadurch gekennzeichnet,
daß die Ködermasse (7) auf den von aneinander angrenzenden Vieleckflächen (3) gebildeten Kanten (8) aufgetragen ist.

3. Fliegenköder nach einem der vorangehenden Ansprüche,
dadruch gekennzeichnet,
daß die Bodenfläche (4) als ebene Standfläche ausgebildet ist.

4. Fliegenköder nach einem der vorangehenden Ansprüche,
dadurch gekennzeichnet, daß der Grundkörper (2) mit metallisch glänzender und reflektierender Oberfläche ausgebildet ist.

## Claims

1. Fly lure (1) consisting of a basic element (2) with a base surface (4) and a shiny upper surface (5) and an applied bait composition (7), characterized in that the basic element (2) is designed as a polygonal semicylinder, preferably as a semicylinder with seven polygon faces (3), and bait composition (7) is applied in the direction (6) of the longitudinal axis, preferably in strips (7), to each polygon face (3).

2. Fly lure according to Claim 1, characterized in that the bait composition (7) is applied to the edges (8) formed by adjoining polygon faces (3).

3. Fly lure according to one of the preceding claims, characterized in that the base surface (4) is designed as a flat standing surface.

4. Fly lure according to one of the preceding claims, characterized in that the basic element (2) is designed with a metallically shiny and reflective upper surface.

## Revendications

1. Appât pour mouches (1) constitué d'un corps de base (2) présentant un fond (4) et possédant une surface luisante (5) et une masse d'appât déposée (7), caractérisé en ce que le corps de base (2) a la forme d'un demi-cylindre polygonal, de préférence d'un demi-cylindre avec sept faces de polygone (3) et en ce qu'on dépose dans la direction longitudinale (6) sur chaque face de polygone (3) une masse d'appât (7), de préférence sous forme de bandes (7).

2. Appât pour mouches selon la revendication 1, caractérisé en ce que la masse d'appât (7) est déposée sur les arêtes (8) formées par des faces de polygone (3) adjacentes.

3. Appât pour mouches selon l'une des revendications précédentes, caractérisé en ce que le fond (4) a la forme d'une assise plane.

4. Appât pour mouches selon l'une quelconque des revendications précédentes, caractérisé en ce que le corps de base (2) est formé d'une surface réfléchissante et métallisée.
